# EUROPÄISCHE PATENTANMELDUNG

(11) **EP 1 631 101 A1**
(43) Veröffentlichungstag der Anmeldung: **01.03.2006**
(21) Anmeldenummer: 04020056.0
(22) Anmeldetag: 24.08.2004
(51) Int. Cl.: H04Q 7/38

(54) **Verfahren zum Aufbau einer Verbindung zwischen einer Basisstation und einem Funkkommunikationsendgerät**

(71) Anmelder: SIEMENS AKTIENGESELLSCHAFT, 80333 München (DE)
(72) Erfinder: Franzen, Michael, 46395 Bocholt (DE); Obermanns, Sebastian, 46395 Bocholt (DE); Schmidt, Malte, 46397 Bocholt (DE)

(57) **Zusammenfassung**

Die Erfindung betrifft ein Verfahren zum Aufbau einer Verbindung zwischen einer Basisstation und einem Funkkommunikationsendgerät, bei dem die Basisstation über eine Antenne ein Testsignal an diejenigen Funkkommunikationsendgeräte überträgt, die der Basisstation zur Funkversorgung zugeordnet sind.

Jedes empfangende Funkkommunikationsendgerät ordnet der Testsignal-Übertragung einen Qualitätswert zu, dessen binäre Symbole einen ersten und einen zweiten Symbolwert umfassen. Die Funkkommunikationsendgeräte melden zeitsynchron und beginnend bei einer vorbestimmten Symbolposition Symbolwerte der jeweils zugeordneten Qualitätswerte zur Basisstation zurück, wobei ein betrachtetes Funkkommunikationsendgerät einen Symbolwert zurückmeldet, wenn dieser dem ersten Symbolwert entspricht. Für den Fall jedoch, dass ein zurückzumeldender Symbolwert dem zweiten Symbolwert entspricht, überwacht das betrachtete Funkkommunikationsendgerät die Symbolwert-Zurückmeldung von weiteren Funkkommunikationsendgeräten. Das betrachtete Funkkommunikationsendgerät beendet die Symbolwert-Zurückmeldung, wenn durch die weiteren Funkkommunikationsendgeräte erste Symbolwerte zurückgemeldet werden. Ansonsten setzt das betrachtete Funkkommunikationsendgerät die Symbolwert-Zurückmeldung fort. Eine Verbindung wird zwischen der Basisstation und demjenigen Funkkommunikationsendgerät aufgebaut, das als letztes einen Symbolwert, der dem ersten Symbolwert entspricht, zur Basisstation zurückgemeldet hat.

## Beschreibung

Die Erfindung betrifft ein Verfahren zum Aufbau einer Verbindung zwischen einer Basisstation und einem Funkkommunikationsendgerät, wobei die Basisstation über eine Antenne ein Testsignal an diejenigen Funkkommunikationsendgeräte überträgt, die der Basisstation zur Funkversorgung zugeordnet sind.

Es sind so genannte "Opportunistic Beamforming"-Verfahren bekannt, bei denen beispielsweise von einer Basisstation ein Testsignal an zugeordnete Mobilstationen ausgesendet wird. Die jeweiligen Mobilstationen bewerten basierend auf dem Testsignal jeweilige Empfangsbedingungen und melden diese an die Basisstation zurück. Nachfolgend wird zwischen der Basisstation und derjenigen Mobilstation eine Verbindung aufgebaut, die die beste Empfangsbedingung aufweist. Die Übertragung des Testsignals mit nachfolgender Auswahl der Mobilstation erfolgt im Rahmen eines so genannten "Probing"-Zeitabschnitts.

Derartige "Opportunistic Beamforming"-Verfahren werden derzeit für eine Verwendung bei Mobilfunknetzen der vierten Generation untersucht und bieten den Vorteil eines erhöhten Diversity-Systemgewinns. Nähere Erläuterungen dazu sind beispielsweise der Druckschrift "Opportunistic Beamforming Using Dumb Antennas", P. Viswanath, IEEE Transactions On Information Theory, Vol. 48, No. 6, June 2002, Seiten 1277 - 1294, entnehmbar.

Derzeit existieren nur wenige Ansätze über die Art und Weise der Rückmeldung der an den Mobilstationen gemessenen Empfangsbedingungen an die Basisstation. Denkbar nahe liegend wäre es, dass die einzelnen Mobilstationen über jeweils zugewiesene Funkübertragungsressourcen die gemessenen Empfangsbedingungen an die Basisstation zurückmelden. Dieses Verfahren hat jedoch den Nachteil, eine größere Anzahl an Funkübertragungsressourcen zu binden, die somit nicht mehr für durchzuführende Nutzdatenübertragungen zur Verfügung stehen würde.

Es ist daher Aufgabe der vorliegenden Erfindung, ein Verfahren zum Aufbau einer Verbindung zwischen einer Basisstation und einem Funkkommunikationsendgerät anzugeben, bei dem Funkkommunikationsendgeräte an eine zugeordnete Basisstation gemessene Empfangsbedingungen mit nur geringem Aufwand an Funkübertragungsressourcen zurückmelden können.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren wird durch jede Mobilstation bzw. durch jedes Funkkommunikationsendgerät ein Qualitätswert verwendet, um basierend auf einem von einer Basisstation gesendeten Testsignal jeweilige Empfangsbedingung zu bewerten.

Dieser Qualitätswert wird durch eine binäre Symbolfolge, beispielsweise bestehend aus einer Folge logischer "0" und logischer "1" Werte dargestellt. Beispielsweise wird der Wert logisch "1" als erster Symbolwert und der Wert logisch "0" als zweiter Symbolwert bezeichnet.

Die Mobilstationen melden die Symbolwerte ihrer jeweiligen Qualitätswerte zeitsynchron und beginnend bei einer vorbestimmten Symbolposition wie folgt zur Basisstation zurück:

Ein betrachtetes Funkkommunikationsendgerät meldet einen Symbolwert zurück, wenn dieser dem ersten Symbolwert - hier logisch "1" - entspricht.
Für den Fall, dass ein zurückzumeldendes Symbol dem zweiten Symbolwert - hier logisch "0" - entspricht, überwacht das betrachtete Funkkommunikationsendgerät die Symbolwert-Zurückmeldung von weiteren Funkkommunikationsendgeräten und beendet die eigene Symbolwert-Zurückmeldung dann, wenn durch die weiteren Funkkommunikationsendgeräte logische "1" Symbolwerte zurückgemeldet werden. Ist dies jedoch nicht der Fall, so setzt das betrachtete Funkkommunikationsendgerät die eigene Symbolwert-Zurückmeldung fort.

Wird während der Überwachung durch zumindest ein weiteres Funkkommunikationsendgerät eine logische "1" übertragen, so weist zumindest dieses eine weitere Funkkommunikationsendgerät bessere Empfangsbedingungen auf, als das betrachtete Funkkommunikationsendgerät - sofern die Übertragung bei der Symbolposition gestartet wird, die einem so genannten "Most Significant Bit, MSB" mit zugeordnetem maximalen Wert entspricht.

Diese Art der Symbolzurückmeldung erfolgt vorteilhafterweise über einen gemeinsamen Rückkanal, der von allen Funkkommunikationsendgeräten gemeinsam genutzt wird.

Ein bis zuletzt zurückmeldendes Funkkommunikationsendgerät weist die besten Empfangsbedingungen des Testsignals auf. Zu diesem Funkkommunikationsendgerät wird dann eine Funkverbindung mit der Basisstation aufgebaut.

Der Aufbau der Funkverbindung erfolgt beispielsweise für eine Übertragung von Nutzdaten bzw. Nutzdatenpaketen im Rahmen einer bereits bestehenden Paketdatenverbindung oder für einen Austausch von Steuerungssignalen während einer so genannten Initialisierungsphase, während der Informationen bzw. Steuersignale zwischen der Basisstation und dem Funkkommunikationsendgerät übertragen werden, ohne dabei bereits Nutzdaten auszutauschen.

Durch die erfindungsgemäße Art der Zurückmeldung des Qualitätswerts wird eine schnelle Auswahl eines Funkkommunikationsendgeräts seitens der Basisstation ermöglicht.

Durch die vorteilhafte Verwendung nur eines gemeinsamen Rückkanals werden Funkübertragungsressourcen eingespart.

Durch die vorteilhafte Verwendung einer Übertragung eines vorbekannten Signals zur Zurückmeldung des ersten Symbolwerts wird zusätzlich Bandbreite eingespart und störende Interferenzen in benachbarten Funkzellen werden vermieden bzw. reduziert. Ein derartiges Signal könnte beispielsweise als Meldesignal geringer Bandbreite realisiert werden. Vorteilhafterweise wird die jeweilige Bandbreite für jede Basisstation von benachbarten Funkzellen jeweils individuell gewählt.

Die vorliegende Erfindung wird anhand einer Zeichnung näher erläutert. Dabei zeigt:
- FIG 1: das erfindungsgemäße Verfahren anhand eines Funkkommunikationssystems mit einer Basisstation und mit mehreren Funkkommunikationsendgeräten, und
- FIG 2: eine vereinfachte Darstellung eines "Opportunistic Beamforming"-Verfahrens, bei dem das erfindungsgemäße Verfahren einsetzbar ist.

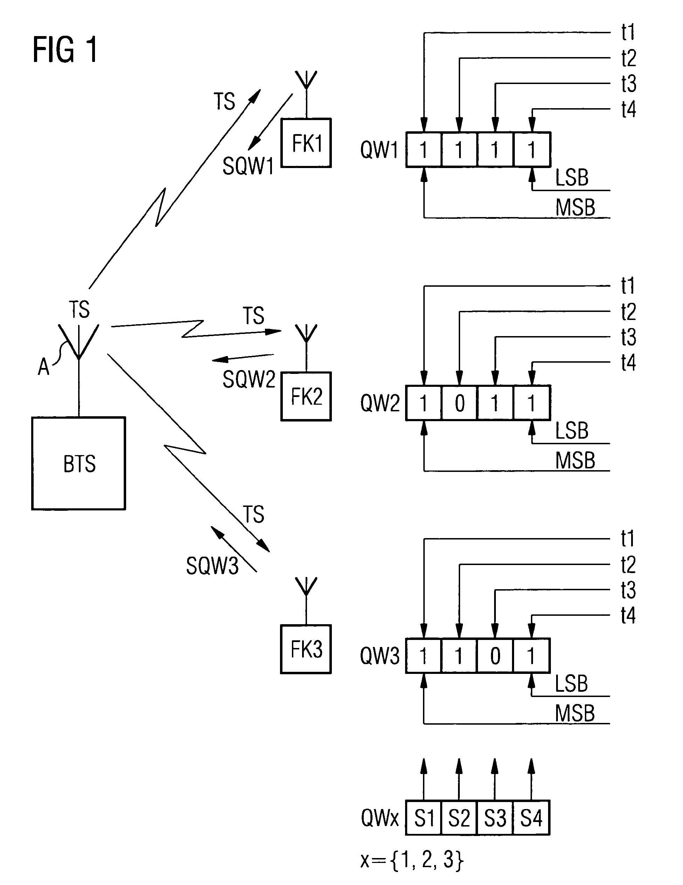

FIG 1 zeigt das erfindungsgemäße Verfahren anhand eines Funkkommunikationssystems mit einer Basisstation BTS und mit mehreren Funkkommunikationsendgeräten FK1 bis FK3.

Seitens der Basisstation BTS wird über eine Antenne A ein Testsignal TS an Funkkommunikationsendgeräte FK1 bis FK3 ausgesendet, die der Basisstation BTS zur Funkversorgung zugeordnet sind.

Jedes einzelne Funkkommunikationsendgerät FK1 bis FK3 empfängt das Testsignal TS und bewertet die Übertragung des Testsignals, indem es einen entsprechenden Qualitätswert QW1 bis QW3 zuordnet.

Seitens eines ersten Funkkommunikationsendgeräts FK1 wird ein C/I-Wert bestimmt, der als erster Qualitätswert QW1 durch binäre Symbole S1 bis S4 dargestellt wird. Der erste Qualitätswert QW1 weist als binäre Symbole S1 bis S4 eine Symbolfolge "1 1 1 1" auf, wobei das Symbol S1="1" als so genanntes "Most Significant Bit, MSB" und das Symbol S4="1" als so genanntes "Least Significant Bit, LSB" bezeichnet wird.

Seitens eines zweiten Funkkommunikationsendgeräts FK2 wird ein C/I-Wert bestimmt, der als zweiter Qualitätswert QW2 durch binäre Symbole S1 bis S4 dargestellt wird. Der zweite Qualitätswert QW2 weist als binäre Symbole S1 bis S4 eine Symbolfolge "1 0 1 1" auf, wobei das Symbol S1="1" als so genanntes "Most Significant Bit, MSB" und das Symbol S4="1" als so genanntes "Least Significant Bit, LSB" bezeichnet wird.

Seitens eines dritten Funkkommunikationsendgeräts FK3 wird ein C/I-Wert bestimmt, der als dritter Qualitätswert QW3 durch binäre Symbole S1 bis S4 dargestellt wird. Der dritte Qualitätswert QW3 weist als binäre Symbole S1 bis S4 eine Symbolfolge "1 1 0 1" auf, wobei das Symbol S1="1" als so genanntes "Most Significant Bit, MSB" und das Symbol S4="1" als so genanntes "Least Significant Bit, LSB" bezeichnet wird.

Nachfolgend wird bei den binär dargestellten Qualitätswerten QW1 bis QW3 der Symbolwert logisch "1" als erster Symbolwert und der Symbolwert logisch "0" als zweiter Symbolwert bezeichnet.

Die drei Funkkommunikationsendgeräte FK1 bis FK3 beginnen nun zu einem ersten Zeitpunkt t1 damit, zeitsynchron und beginnend beim "Most Significant Bit, MSB" Symbolwerte des jeweiligen Qualitätswerts QW1 bis QW3 an die Basisstation zurückzumelden. Die Zurückmeldung erfolgt unter Verwendung von vorbekannten Signalen SQW1 bis SQW3.

Das erste Funkkommunikationsendgerät FK1 meldet den Symbolwert "1" des ersten Symbols S1 zurück. Das zweite Funkkommunikationsendgerät FK2 meldet den Symbolwert "1" des ersten Symbols S1 zurück. Das dritte Funkkommunikationsendgerät FK3 meldet den Symbolwert "1" des ersten Symbols S1 zurück.

Zu einem zweiten Zeitpunkt t2 meldet das erste Funkkommunikationsendgerät FK1 den Symbolwert "1" des zweiten Symbols S2 zurück, während das dritte Funkkommunikationsendgerät FK3 den Symbolwert "1" des zweiten Symbols S2 zurückmeldet.

Das zweite Funkkommunikationsendgerät FK2 meldet den Symbolwert "0" des Symbols S2 nicht zurück, da dieser dem zweiten Symbolwert entspricht. Stattdessen überwacht das zweite Funkkommunikationsendgerät FK2, ob zum zweiten Zeitpunkt t2 andere Funkkommunikationsendgeräte Symbole mit zugeordnetem ersten Symbolwert zurückmelden. Dies ist beim ersten Funkkommunikationsendgerät FK1 und beim dritten Funkkommunikationsendgerät FK3 der Fall, so dass diese beiden Funkkommunikationsendgeräte FK1, FK3 jeweils bessere Empfangsbedingungen aufweisen müssen. Dies ergibt sich aus dem den binären Symbolen S1 bis S4 jeweils zugeordnetem Wert. So repräsentiert bekanntermaßen das "Most Significant Bit, MSB" einen Wert = 2³, während das "Least Significant Bit, LSB" einen Wert = 2° repräsentiert. Das zweite Funkkommunikationsendgerät FK2 beendet nun die Symbolwert-Zurückmeldung des zweiten Qualitätswerts QW₂.

Zu einem dritten Zeitpunkt t3 meldet das erste Funkkommunikationsendgerät FK1 den Symbolwert "1" des dritten Symbols S3 zurück. Das dritte Funkkommunikationsendgerät FK3 meldet den Symbolwert "0" des Symbols S3 nicht zurück, da dieser dem zweiten Symbolwert entspricht.

Stattdessen überwacht das dritte Funkkommunikationsendgerät FK3, ob zum dritten Zeitpunkt t3 andere Funkkommunikationsendgeräte Symbole mit zugeordnetem ersten Symbolwert zurückmelden. Dies ist nur noch beim ersten Funkkommunikationsendgerät FK1 der Fall, so dass dieses eine bessere Empfangsbedingung aufweisen muss. Das dritte Funkkommunikationsendgerät FK3 beendet nun die Symbolwert-Zurückmeldung des dritten Qualitätswerts QW3.

Bereits jetzt ist es seitens der Basisstation BTS möglich, eine Verbindung mit dem verbliebenen ersten Funkkommunikationsendgerät FK1 aufzubauen.

In einer vorteilhaften Weiterbildung jedoch wird noch die Übertragung des letzten Symbolwerts "1" des vierten Symbols S4 des ersten Funkkommunikationsendgeräts FK1 abgewartet, da der vollständig übermittelte erste Qualitätswert QW1 als gemessener C/I-Wert für die einzurichtende Verbindung im Rahmen einer Sendeleistungssteuerung verwendbar ist.

In einer vorteilhaften Weiterbildung übermittelt das erste Funkkommunikationsendgerät FK1 ohne eine Bestätigung seitens der Basisstation BTS abzuwarten, eine dem ersten Funkkommunikationsendgerät FK1 individuell zugeordnete Teilnehmeradresse an die Basisstation.

Für den hier nicht dargestellten Fall, dass der erste Qualitätswert QW1 eine Symbolfolge "1 1 0 1" aufweist, der zweite Qualitätswert QW2 wie vorher die Symbolfolge "1 0 1 1" aufweist und der dritte Qualitätswert QW3 eine Symbolfolge "1 1 0 0" aufweist, erfolgt die Zurückmeldung der Symbolwerte der ersten und der zweiten Symbole S1, S2 sowie die Beendigung der Symbolwert-Zurückmeldung seitens des zweiten Funkkommunikationsendgeräts FK2 wie vorstehend beschrieben.

Zum dritten Zeitpunkt t3 meldet das erste Funkkommunikationsendgerät FK1 den Symbolwert "0" des dritten Symbols S3 nicht zurück, da dieser dem zweiten Symbolwert entspricht. Statt dessen überwacht nun das erste Funkkommunikationsendgerät FK1, ob von weiteren Funkkommunikationsendgeräten - hier dem dritten Funkkommunikationsendgerät FK3 - ein erster Symbolwert "1" an die Basisstation BTS zurückgemeldet wird. Da dies nicht der Fall ist, meldet das erste Funkkommunikationsendgerät FK1 den Symbolwert "0" des dritten Symbols S3 zurück und/oder setzt die Zurückmeldung mit nachfolgenden Symbolwerten fort. Das erste Funkkommunikationsendgerät FK1 kann in diesem Fall davon ausgehen, dass alle noch an der Rückmeldung beteiligten Funkkommunikationsendgeräte den Symbolwert "0" zurückgemeldet haben.

Die Alternative ergibt sich daraus, dass anstelle der Zurückmeldung des Symbolwerts "0" es auch möglich ist, dass seitens der Basisstation BTS für den Symbolwert des dritten Symbols S3 der logische Wert "0" zum dritten Zeitpunkt t3 vorausgesetzt wird.

Zum dritten Zeitpunkt t3 meldet das dritte Funkkommunikationsendgerät FK3 den Symbolwert "0" des dritten Symbols S3 nicht zurück, da dieser dem zweiten Symbolwert entspricht. Statt dessen überwacht auch das dritte Funkkommunikationsendgerät FK3, ob von weiteren Funkkommunikationsendgeräten - hier dem ersten Funkkommunikationsendgerät FK1 - ein erster Symbolwert an die Basisstation BTS zurückgemeldet wird. Da dies nicht der Fall ist, meldet auch das dritte Funkkommunikationsendgerät FK3 den Symbolwert "0" des dritten Symbols S3 zurück und/oder setzt die Zurückmeldung mit nachfolgenden Symbolwerten fort. Das dritte Funkkommunikationsendgerät FK3 kann in diesem Fall davon ausgehen, dass alle noch an der Rückmeldung beteiligten Funkkommunikationsendgeräte den Symbolwert "0" zurückgemeldet haben.

Die Alternative ergibt sich daraus, dass anstelle der Zurückmeldung des Symbolwerts "0" es auch möglich ist, dass seitens der Basisstation BTS für den Symbolwert des dritten Symbols S3 der logische Wert "0" für den dritten Zeitpunkt t3 vorausgesetzt wird.

Zum vierten Zeitpunkt t4 meldet das erste Funkkommunikationsendgerät FK1 den Symbolwert "1" des vierten Symbols S4 zurück. Das dritte Funkkommunikationsendgerät FK3 meldet den Symbolwert "0" des vierten Symbols S4 nicht zurück, da dieser dem zweiten Symbolwert entspricht.

Stattdessen überwacht das dritte Funkkommunikationsendgerät FK3, ob zum vierten Zeitpunkt t4 andere Funkkommunikationsendgeräte Symbole mit zugeordnetem ersten Symbolwert zurückmelden. Dies ist nur noch beim ersten Funkkommunikationsendgerät FK1 der Fall, so dass dieses eine bessere Empfangsbedingung aufweisen muss. Entsprechend beendet das dritte Funkkommunikationsendgerät FK3 die Symbolwert-Zurückmeldung, bzw. wird eine Verbindung zwischen der Basisstation BTS und dem verbleibenden ersten Funkkommunikationsendgerät FK1 aufgebaut.

Neben der hier geschilderten Verwendung eines Träger/Interferenz-Werts C/I ist es auch möglich, einen Nutzsignal/Störsignal-Abstand oder ähnliche Qualitätswerte zu verwenden.

Für den hier nicht dargestellten Fall, dass während eines ersten Durchgangs zumindest zwei Funkkommunikationsendgeräte einen identischen Qualitätswert bestimmen und damit gleiche Empfangsbedingungen beim Testsignalempfang aufweisen, sind folgende Weiterbildungen möglich:

In einer ersten Ausgestaltung der Erfindung wird die Zurückmeldung von Qualitätswertsymbolen in einem zweiten Durchgang durchgeführt, wobei seitens der betroffenen Funkkommunikationsendgeräte eine jeweilige individuelle Zufallszahl gewählt und diese als zurückzumeldender Qualitätswert verwendet wird.

In einer zweiten Ausgestaltung ist es möglich, eine Prioritätszahl oder eine Adresse zu verwenden, die jedem Funkkommunikationsendgerät individuell zugeordnet ist, im zweiten Durchgang als Qualitätswert zurückzumelden.

Um eine weitere Fairness zu realisieren, ist es auch möglich, die Prioritätszahl zeitlich wechselnd um einen vorbestimmten Offset zu verändern, um bei einem weiteren Durchgängen bislang benachteiligte Funkkommunikationsendgeräte oder Mobilstationen nun zu bevorzugen.

Basierend auf diesem zweiten Durchgang wird dann der Verbindungsaufbau durchgeführt.

Die jeweiligen Symbolwerte werden während einer so genannten Bitzeitdauer zurückgemeldet. Diese ist dabei derart festzulegen, dass die zurückgemeldeten Symbolwerte sowohl seitens der Basisstation als auch seitens der empfangenden Funkkommunikationsendgeräte eindeutig detektierbar sind.

In einer nicht dargestellten weiteren vorteilhaften Weiterbildung wird seitens der Basisstation BTS zusammen mit dem Testsignal TS eine zusätzliche Information übertragen. Diese Information definiert, für welches Funkkommunikationsendgerät überhaupt Nachrichten seitens der Basisstation vorliegen. Bei dieser Ausgestaltungsform melden dann nur diejenigen Funkkommunikationsendgeräte ihre jeweiligen Qualitätswertsymbole zurück, die durch die Information definiert sind.

Anstelle der Zurückmeldung unter Verwendung eines vorbekannten Signals über einen gemeinsam verwendeten Funkübertragungskanal bzw. über eine gemeinsam verwendete Funkübertragungsressource ist es auch möglich, die jeweiligen Qualitätswertsymbole unter Verwendung von Vielfachzugriffverfahren an die Basisstation zurückzumelden. Beispielsweise käme hier ein CDMA-, ein TDMA- oder ein FDMA-Vielfachzugriffsverfahren oder Kombinationen daraus in Frage.

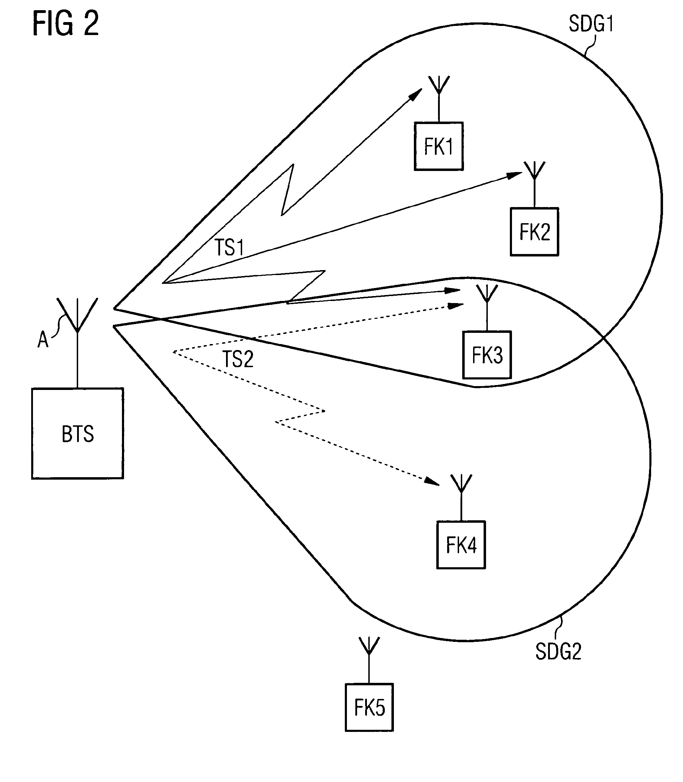

FIG 2 zeigt eine vereinfachte Darstellung eines "Opportunistic Beamforming"-Verfahrens, bei dem das erfindungsgemäße Verfahren einsetzbar ist.

Dabei wird seitens einer Basisstation BTS ein erstes Testsignal TS1 über die Antenne A abgestrahlt, wobei zugeordnete Funkkommunikationsendgeräte FK1 bis FK3 über ein erstes Strahlungsdiagramm SDG1 das erste Testsignal TS1 empfangen.

Es wird angenommen, dass unter Verwendung des erfindungsgemäßen Verfahrens ein erstes Funkkommunikationsendgerät FK1 für eine Verbindung mit der Basisstation BTS ausgewählt wird. Entsprechend weist ein drittes Funkkommunikationsendgerät FK3 eine schlechtere Empfangsqualität des ersten Testsignals TS1 auf, als das erste Funkkommunikationsendgerät FK1.

Seitens der Basisstation BTS wird dann ein zweites Testsignal TS2 über die Antenne A abgestrahlt, wobei zugeordnete Funkkommunikationsendgeräte FK3 und FK4 über ein zweites Strahlungsdiagramm SDG2 das zweite Testsignal TS2 empfangen.

Durch die Verwendung des zweiten Strahlungsdiagramms SDG2 und/oder durch das zweite Testsignal TS2 wird das dritte Funkkommunikationsendgerät FK3 nun eine neue Empfangssituation aufweisen.

Wird nun das erfindungsgemäße Verfahren erneut entsprechend durchgeführt, so ist es möglich, nun das dritte Funkkommunikationsendgerät FK3 für eine Verbindung mit der Basisstation BTS auszuwählen, sofern diese eine bessere Empfangsqualität des zweiten Testsignals TS2 im Vergleich mit einem vierten Funkkommunikationsendgerät FK4.

Es ist nun möglich, Testsignale über individuell zugeordnete Strahlungsdiagramme periodisch wiederholt zu senden. Sofern sich die Strahlungsdiagramme zumindest teilweise überlappen, wird jedes einzelne Funkkommunikationsendgerät mit großer Wahrscheinlichkeit zumindest einmal bevorzugt bedient werden.

## Patentansprüche

1. Verfahren zum Aufbau einer Verbindung zwischen einer Basisstation und einem Funkkommunikationsendgerät,
- bei dem die Basisstation ein Testsignal an diejenigen Funkkommunikationsendgeräte überträgt, die der Basisstation zur Funkversorgung zugeordnet sind,
- bei dem jedes empfangende Funkkommunikationsendgerät der Testsignal-Übertragung einen Qualitätswert zuordnet, dessen binäre Symbole einen ersten und einen zweiten Symbolwert umfassen,
- bei dem die Funkkommunikationsendgeräte zeitsynchron und beginnend bei einer vorbestimmten Symbolposition Symbolwerte der jeweils zugeordneten Qualitätswerte wie folgt zur Basisstation zurückmelden:
a. dass ein betrachtetes Funkkommunikationsendgerät einen Symbolwert zurückmeldet, wenn dieser dem ersten Symbolwert entspricht,
b. dass das betrachtete Funkkommunikationsendgerät für den Fall eines zurückzumeldenden zweiten Symbolwerts die Symbolwert-Zurückmeldung von weiteren Funkkommunikationsendgeräten überwacht, wobei das betrachtete Funkkommunikationsendgerät die Symbolwert-Zurückmeldung beendet, wenn durch die weiteren Funkkommunikationsendgeräte erste Symbolwerte zurückgemeldet werden, und ansonsten das betrachtete Funkkommunikationsendgerät die Symbolwert-Zurückmeldung fortsetzt,
- bei dem eine Verbindung zwischen der Basisstation und demjenigen Funkkommunikationsendgerät aufgebaut wird, das als letztes einen Symbolwert, der dem ersten Symbolwert entspricht, zur Basisstation zurückgemeldet hat.

2. Verfahren nach Anspruch 1, bei dem als Qualitätswert ein Nutzsignal-Störsignalabstand und/oder ein Trägersignal-Interferenzsignalabstand verwendet wird, wobei das Testsignal als Nutzsignal und/oder als Trägersignal verwendet wird.

3. Verfahren nach Anspruch 1, bei dem das Testsignal der Basisstation periodisch wiederholt gesendet wird.

4. Verfahren nach Anspruch 3, bei dem jedem Testsignal jeweils ein individuelles Strahlungsdiagramm einer Basisstationsantenne zugeordnet wird und sich Versorgungsbereiche der Strahlungsdiagramme zumindest teilweise überlappen.

5. Verfahren nach Anspruch 3, bei dem das Testsignal als Teil eines Opportunistic-Beamforming-Verfahrens gesendet wird.

6. Verfahren nach Anspruch 1, bei dem für den Fall, dass zumindest zwei Funkkommunikationsendgeräte der Testsignal-Übertragung einen identischen ersten Qualitätswert zuordnen, die entsprechenden Funkkommunikationsendgeräte als zweiten Qualitätswert jeweils eine Zufallszahl oder eine Prioritätszahl oder eine Adresse wählen und diesen in einem zweiten Verfahrensdurchgang symbolweise zur Basisstation zurückmelden und der Verbindungsaufbau basierend auf den zurückgemeldeten Symbolen des zweiten Qualitätswerts erfolgt.

7. Verfahren nach einem der vorhergehenden Ansprüche, bei dem jedes Funkkommunikationsendgerät den jeweiligen ersten Symbolwert während einer Bitzeitdauer an die Basisstation zurückmeldet, wobei die Bitzeitdauer derart gewählt wird, dass sowohl der Empfang des zurückgemeldeten Symbolwerts seitens der Basisstation als auch seitens der empfangenden Funkkommunikationsendgeräte gewährleistet wird.

8. Verfahren nach einem der vorhergehenden Ansprüche,
- bei dem die Basisstation zusammen mit dem Testsignal eine Information überträgt, die definiert, für welche Funkkommunikationsendgeräte eine Nachrichtenübertragung vorliegt, und
- bei dem nur die in der Information definierten Funkkommunikationsendgeräte den Qualitätswert symbolweise zurückmelden.

9. Verfahren nach einem der vorhergehenden Ansprüche, bei dem die Zurückmeldung des ersten Symbolwerts unter Verwendung eines Vielfachzugriffsverfahrens durchgeführt wird.

10. Verfahren nach einem der vorhergehenden Ansprüche, bei dem die Zurückmeldung des ersten Symbolwerts durch eine Übertragung eines vorbekannten Signals erfolgt.
